Europäisches Patentamt

European Patent Office

Office européen des brevets

(11) Numéro de publication: **0 538 144 B1**

(12) **FASCICULE DE BREVET EUROPEEN**

(45) Date de publication de fascicule du brevet: **11.01.95** (51) Int. Cl.6: **G01N 3/20**

(21) Numéro de dépôt: **92402847.5**

(22) Date de dépôt: **16.10.92**

(54) **Procédé de mesure en continu des caractéristiques mécaniques d'une bande, notamment d'une bande d'acier, produite en continu.**

(30) Priorité: **17.10.91 FR 9112834**

(43) Date de publication de la demande:
**21.04.93 Bulletin 93/16**

(45) Mention de la délivrance du brevet:
**11.01.95 Bulletin 95/02**

(84) Etats contractants désignés:
**AT BE CH DE DK ES FR GB GR IT LI LU NL PT
SE**

(56) Documents cités:
**EP-A- 0 025 646
EP-A- 0 253 644
DD-A- 257 686
DD-A- 291 401**

**WELDING INTERNATIONAL. vol. 3, no. 11,
1989, ABINGTON GB pages 947 - 953 A. NOU-
TOMI ET AL. 'Residual stress measurement
on plasma sprayed coatings'**

(73) Titulaire: **SOLLAC**
**Immeuble Elysées-La Défense, 29 Le Parvis
F-92800 Puteaux (FR)**

(72) Inventeur: **Michaud, Hervé**
**26, rue Voltaire
F-42100 Saint Etienne (FR)**
Inventeur: **Fortunier, Roland**
**60, Résidence de l'Orangerie
F-42580 L'Etrat (FR)**
Inventeur: **Friedrich, Marc**
**48, rue des Bleuets
F-57070 Metz Vallieres (FR)**

(74) Mandataire: **Polus, Camille et al**
**c/o Cabinet Lavoix
2, Place d'Estienne d'Orves
F-75441 Paris Cedex 09 (FR)**

EP 0 538 144 B1

## Description

L'invention est relative à la détermination, en continu, de la limite d'élasticité d'un matériau se présentant sous la forme d'une bande en défilement, notamment d'une bande d'acier.

Les bandes d'acier destinées par exemple à l'emboutissage sont produites dans des lignes de fabrication continues comportant par exemple un laminoir à froid, un recuit et un skinpass. L'ensemble de ce procédé confère aux bandes une géométrie caractérisée par l'épaisseur et des propriétés mécaniques, en particulier une limite d'élasticité qui peut être variable selon la direction dans laquelle on la mesure. Ces caractéristiques mécaniques sont représentatives du comportement à l'emboutissage des bandes et il faut les contrôler.

La technique actuelle de contrôle des caractéristiques mécaniques consiste à prélever des échantillons et à faire des essais de traction. Cette technique a l'inconvénient de ne pas être continue. Elle permet de faire des réglages ponctuels de la ligne de fabrication mais ne permet pas de faire de la régulation.

On connait dans le document DD-A-257 686 un dispositif de mesure par rayons X des coefficients d'élasticité d'un matériau, c'est à dire des coefficients qui relient le tenseur des contraintes et le tenseur des déformations élastiques. Dans ce dispositif on impose au matériau une déformation localisée, et, dans la zone de la surface qui subit la déformation, on mesure une contrainte superficielle dans une direction determinée. Mais ce dispositif ne permet pas de mesurer la limite d'élasticité qui est la grandeur à déterminer lors de la mesure des caractéristiques mécaniques d'un matériau.

Le but de la présente invention est de proposer un procédé de détermination, en continu, de la limite d'élasticité d'un matériau se présentant sous la forme d'une bande, notamment d'une bande d'acier, produite en continu qui permette de faire une régulation de la ligne de fabrication.

A cet effet, l'invention a pour objet un procédé de détermination, en continu, de la limite d'élasticité d'un matériau se présentant sous la forme d'une bande en défilement, notamment d'une bande en acier, en un point déterminé de la ligne de fabrication :

- on impose à ladite bande une déformation localisée connue telle qu'au moins dans une zone d'une surface de la bande la déformation soit partiellement élastoplastique ;
- dans la zone de la surface qui subit une déformation élastoplastique, on évalue au moins une contrainte superficielle dans une direction déterminée.

Cette contrainte superficielle fournit une bonne estimation de la limite d'élasticité de la bande dans ladite direction.

De préférence, on évalue trois contraintes superficielles orientées :

- l'une dans la direction de défilement de la bande ;
- la deuxième dans une direction perpendiculaire à la direction de défilement de la bande ;
- la troisième dans une direction orientée à 45° par rapport à la direction de défilement de la bande.

Selon un premier mode de réalisation, pour produire la déformation de la bande, on enroule cette dernière sur un cylindre dont le rayon est suffisamment petit pour entraîner une déformation plastique par allongement des fibres externes de la bande.

Selon un autre mode de réalisation, on utilise un cylindre dont la surface latérale comporte un bossage saillant de forme torique.

Les contraintes sont mesurées par diffraction de rayons X.

L'invention concerne également un dispositif pour la mise en oeuvre du procédé comportant un rouleau dont la surface latérale comporte un bossage saillant torique et quatre goniomètres a rayons X disposés au droit du rouleau.

L'invention va maintenant être décrite plus en détail en regard des figures annexées sur lesquelles :

- la figure 1 est une vue schématique d'une bande enroulée sur un cylindre ;
- la figure 2 est un cylindre comportant un bossage saillant torique conforme à l'invention ;
- la figure 3 est une vue schématique des déformations engendrées sur une bande par un rouleau présentant un bossage torique ;
- la figure 4 est une représentation schématique d'un goniomètre utilisé pour l'évaluation de la contrainte par rayons X ;
- la figure 5 est une représentation schématique de la disposition des gonomiètres au dessus de la bande.

Lorsque par un processus mécanique on soumet une bande d'acier à une déformation et qu'on mesure simultanément la déformation et la contrainte superficielle à l'endroit qui est déformé on peut tracer une courbe contrainte/déformation semblable à une courbe de traction. Cette courbe présente d'abord une partie linéaire qui correspond à la déformation élastique, puis, lorsque la déformation est suffisante, une zone où sa contrainte varie peu lorsque la déformation augmente. Cette zone correspond à la déformation plastique et la contrainte que l'on mesure est représentative de la limite d'élasticité de la bande.

Si on impose une déformation suffisante pour être élastoplastique, et si on mesure la contrainte superficielle, on a alors une estimation de la limite d'élasticité qui est voisine de la contrainte mesurée.

Ce qui vient d'être décrit est le principe de base du procédé objet de l'invention.

Dans un premier mode de réalisation, on enroule partiellement la bande autour d'un cylindre de petit diamètre. Par exemple pour une bande de 0,2 mm d'épaisseur on enroule la bande autour d'un cylindre de 100 mm de diamètre.

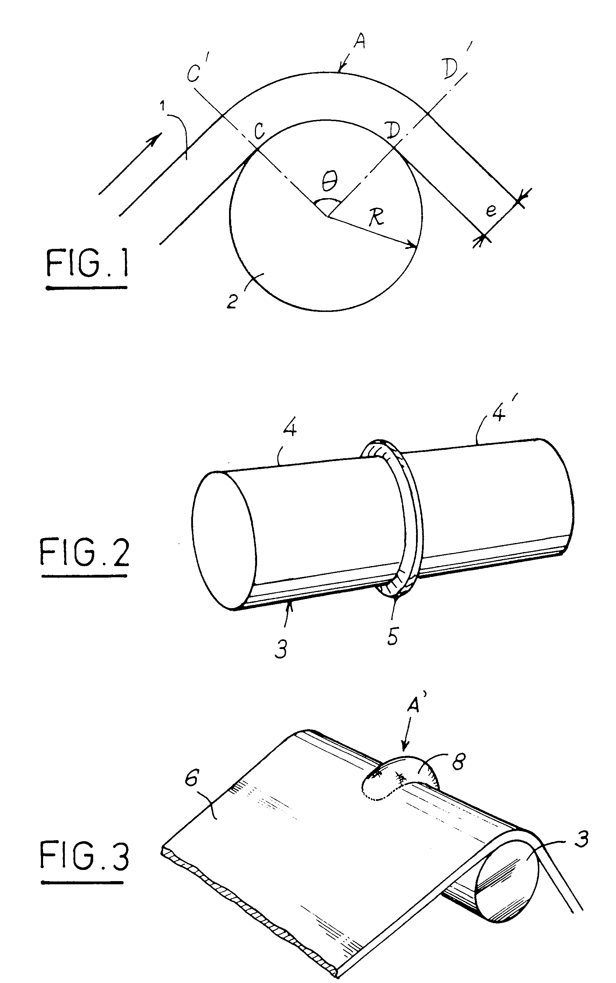

Comme cela est représenté à la figure 1, la bande 1 d'épaisseur e est en contact avec le cylindre 2. La fibre neutre d'un rayon R, définie par l'arc CD d'angle $\theta$, ne subit pas d'allongement au cours de cette flexion et a une longueur $\theta.R$. Sur la face externe de la bande qui n'est pas en contact avec le cylindre, la bande est déformée selon l'arc C'D' qui a une longueur

$$\left(R + \frac{e}{2}\right)\theta.$$

Cet arc a subi un allongement égal à

$$\frac{\left(R + \frac{e}{2}\right)\theta - R\theta}{R\theta} = \frac{e}{2R}$$

et il existe en surface de la bande une contrainte $\sigma$. Si

$$\frac{e}{2R}$$

est supérieur à 0,002 (soit 0,2%), l'allongement subi par les fibres externes de la bande peut être suffisant pour que la déformation soit élastoplastique et que la contrainte $\sigma$ soit sensiblement égale à la limite d'élasticité dans la direction de défilement de la bande.

On évalue les contraintes par diffraction de rayons X selon un procédé qui sera décrit plus loin.

Une bande laminée à froid n'a pas des caractéristiques mécaniques identiques dans toutes les directions et il faut connaître ces caractéristiques dans au moins trois directions pour prévoir le comportement de la bande à l'emboutissage. Pour cela, il faut déterminer la limite d'élasticité dans plusieurs directions.

Pour déterminer la limite d'élasticité dans plusieurs directions, on impose une déformation élastoplastique dans plusieurs directions par exemple en créant temporairement une bosse sur la bande, et on mesure les contraintes superficielles dans plusieurs directions. On mesure les contraintes par exemple dans la direction du défilement de la bande, dans une direction perpendiculaire à la direction du défilement de la bande et dans une direction orientée à 45° par rapport à la direction de défilement de la bande.

Dans un deuxième mode de réalisation, on enroule la bande sur un cylindre repéré généralement par 3 à la figure 2 et qui comporte une table cylindrique 4,4' et un bossage saillant torique 5, ce qui impose à la bande une déformation temporaire en forme de bosse.

La figure 3 représente une bande 6 se déplaçant dans le sens de la flèche et s'enroulant autour d'un cylindre 3 comportant un bossage torique. A l'emplacement du bossage torique, la tôle forme une bosse 8 qui épouse la forme du bossage.

Cette bosse correspond à une déformation en surface de la bande qui se fait non seulement dans la direction du défilement de la bande mais aussi dans une direction perpendiculaire et également dans les autres directions.

En mesurant par diffraction des rayons X les contraintes dans trois directions, parallèlement, perpendiculairement et à 45° par rapport à la direction de défilement de la bande, on peut évaluer les limites d'élasticité dans ces trois directions et donc l'anisotropie de la bande.

Cette mesure s'effectue en un emplacement A' de la zone dans laquelle la déformation élastoplastique précitée existe.

Toutes ces mesures se font en continu et peuvent être faites sur des bandes défilant à au moins 600 m/mn. Ceci permet d'utiliser ce procédé pour réguler la ligne de fabrication.

La mesure des contraintes par rayons X se fait selon un procédé dont les principes ont été largement publiés et décrits notamment dans l'article de G. MEADER "Développements actuels de la détermination de contraintes par diffraction de rayons X" paru dans la revue "Matériaux et Techniques" de septembre octobre 1988 pages 5 à 12.

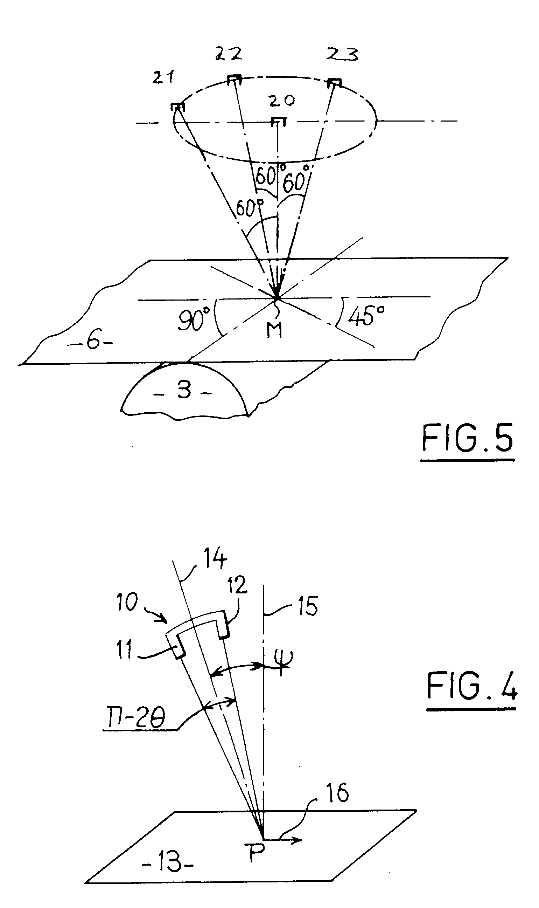

Pour mettre en oeuvre le procédé, on utilise des goniomètres. Un de ces goniomètres est repéré généralement par 10 à la figure 4. Il comporte un émetteur 11 de rayons X et un détecteur 12. L'émetteur 11 et le détecteur 12 visent un même point P de la surface 13 à analyser. Les axes de l'émetteur 11 et du détecteur 12 forment entre eux un angle $\pi - 2\theta$. La bissectrice 14 de l'angle que forment entre eux les axes de l'émetteur 11 et du détecteur 12 fait un angle $\Psi$ avec la perpendiculaire 15 à la surface 13 à analyser. L'angle $\Psi$ est déterminé de façon connue en fonction des conditions de l'analyse à réaliser.

Le détecteur permet de mesurer l'angle de Bragg $\theta$ caractéristique de la diffraction des rayons X au point P.

Lorsque le matériau analysé présente des contraintes, l'angle de Bragg dépend de l'angle Ψ.

Pour évaluer une contrainte on utilise deux goniomètres, l'un avec un angle Ψ = 0° et le second avec un angle Ψ = 60° par exemple. La contrainte est alors proportionnelle à l'écart entre les angles de Bragg mesurés par chacun des détecteurs. La contrainte est mesurée dans la direction de la flèche 16 parallèle à la trace sur la surface 13 du plan défini par la perpendiculaire 15 à la surface 13 et par la bissectrice 14 de l'angle formé par l'émetteur 11 et le détecteur 12.

Pour mesurer les contraintes dans trois directions au dessus du point de contact de la bande 6 avec le rouleau 3 muni d'un bossage saillant torique, on dispose (figure 5) quatre goniomètres 20,21,22,23 qui visent le point M. Le goniomètre 20 est disposé à la verticale du point M. Les goniomètres 21,22,23 sont inclinés à 60° par rapport à la verticale et disposés en cercle de telle sorte que :
- le goniomètre 21 soit orienté dans la direction de défilement de la bande ;
- le goniomètre 23 soit orienté perpendiculairement à la direction de défilement de la bande ;
- le goniomètre 22 soit orienté à 45° par rapport à la direction de défilement de la bande.

Un tel dispositif fonctionne en continu. Lorsqu'il est placé en sortie d'une ligne de fabrication de bande, il permet de réguler en continu les paramètres qui agissent sur les caractéristiques mécaniques de la bande.

Lorsque la ligne de fabrication comporte plusieurs étapes, on peut disposer un dispositif en sortie de chacune des étapes et ainsi réguler chaque composante de la ligne de fabrication.

## Revendications

1. Procédé de détermination, en continu, de la limite d'élasticité d'un matériau se présentant sous la forme d'une bande (1;6) en défilement, notamment d'une bande d'acier, en un point déterminé de la ligne de fabrication, procédé dans lequel :
- on impose à ladite bande une déformation localisée connue telle qu'au moins dans une zone d'une surface de la bande, la déformation soit élastoplastique;
- dans la zone de la surface qui subit une déformation élastoplastique (A), on mesure au moins une contrainte superficielle (σ) dans une direction déterminée.

2. Procédé selon la revendication 1, caractérisé en ce qu'on mesure dans la zone de déformation élastoplastique trois contraintes superficielles orientées :
- l'une dans le sens de défilement de la bande ;
- la deuxième dans le sens perpendiculaire au sens de défilement de la bande ;
- la troisième dans une direction intermédiaire.

3. Procédé selon l'une quelconque des revendications précédentes, caractérisé en ce que, pour produire la déformation plastique de la bande, on enroule la bande (1;6) sur un cylindre (3) dont le rayon (R) est suffisamment petit pour entraîner une déformation plastique par allongement des fibres externes de la bande.

4. Procédé selon la revendication 3, caractérisé en ce qu on enroule la bande (1;6) sur un cylindre (3) comportant sur sa surface latérale (4,4') un bossage saillant (5) de forme torique.

5. Procédé selon l'une quelconque des revendications précédentes, caractérisé en ce qu'on évalue les contraintes par diffraction de rayons X.

6. Dispositif pour la mise en oeuvre du procédé selon l'une quelconque des revendications 2 à 5, comportant un rouleau (3) dont la surface latérale (4, 4') est munie d'un bossage (5) saillant torique et quatre goniomètres à rayons X (20,21,22,23) disposés au droit du rouleau (3).

## Claims

1. A process for continuous determination of the elastic limit of a material in the form of a moving strip (1;6), particularly a steel strip at a given point on the manufacturing line, wherein:
- a known localised deformation is imposed on the said strip so that, at least in one region of a surface of the strip, the deformation is clastoplastic;
- in the surface region (A) undergoing elastoplastic deformation, at least one surface stress (σ) is measured in a given direction.

2. A process in accordance with claim 1, **characterised in that** three surface stresses are measured in the region of elastoplastic deformation,
- one of the stresses being oriented in the direction of movement of the strip;
- the second being oriented in the direction perpendicular to the direction of movement of the strip; and

- the third being oriented in an intermediate direction.

3.  A process in accordance with one of the preceding claims, **characterised in that** in order to produce the plastic deformation of the strip (1;6), it is rolled on to a cylinder (3), the radius (R) of which is sufficiently small to bring about plastic deformation by elongation of the outer fibres of the strip.

4.  A process in accordance with claim 3, **characterised in that** the strip (1;6) is rolled on to a cylinder (3) which has a toric projection (5) on its lateral surface (4,4').

5.  A process in accordance with one of the preceding claims, **characterised in that** the stresses are evaluated by X-ray diffraction.

6.  A device for carrying out the process in accordance with one of claims 2 to 5, comprising a roller (3), the lateral surface (4,4') of which is provided with a toric projection (5), and four X-ray goniometers (20, 21, 22, 23) arranged at the right angles to the roller (3).

**Patentansprüche**

1.  Verfahren zur kontinuierlichen Messung der Streckgrenze eines Werkstotfes in Form eines kontinuierlich hergestellten Bandes (1; 6), insbesondere eines Stahlbandes, an einem bestimmten Punkt der Fertigungsstraße, bei dem: auf dieses Band eine bekannte lokale Verformung beaufschlagt wird, die so beschaffen ist, daß mindestens in einem Oberflächenbereich des Bandes diese Verformung elastoplastisch ist; in dem Oberflächenbereich, der einer elastoplastischen Verformung (A) unterzogen wird, mindestens eine Oberflächenspannung ($\sigma$) in einer bestimmten Richtung gemessen wird.

2.  Verfahren nach Anspruch 1. **dadurch gekennzeichnet**, **daß** in dem elastoplastischen Verformungsbereich drei Oberflächenspannungen gemessen werden, die wie folgt ausgerichtet sind: eine in Ablaufrichtung des Materialbandes, die zweite senkrecht zur Ablaufrichtung des Materialbandes, die dritte in einer Zwischenrichtung.

3.  Verfahren nach einem der vorausgegangenen Ansprüche, **dadurch gekennzeichnet**, **daß** zur Erzeugung der plastischen Verfomung des Bando das Band (1; 6) auf einen Zylinder (3) gewik-

kelt wird, dessen Radius (R) genügend klein ist, um eine plastische Verformung durch Dehnung der externen Fasern des Bandes zu verursachen.

4.  Verfahren nach Anspruch 3, **dadurch gekennzeichnet**, **daß** das Band (1; 6) auf einen Zylinder (3) gewickelt wird, der auf seiner Seitenfläche (4, 4') einen torusförmigen vorspringenden Wulst (5) Torus aufweist.

5.  Verfahren nach einem der vorausgegangenen Ansprüche, **dadurch gekennzeichnet**, **daß** die Spannungen durch Diffraktion von Röntgenstrahlen bewertet werden.

6.  Vorrichtung für die Durchführung des Verfahrens nach einem der Ansprüche 2 bis 5, die eine Walze (3) aufweist, deren Seitenfläche (4, 4') mit einem torusförmigen vorspringenden Wulst (5) versehen ist und die vier Röntgengoniometer (20, 21, 22, 23) enthält, welche an der Walze (3) angeordnet sind.

FIG.1

FIG.2

FIG.3

FIG.5

FIG.4